# FASCICULE DE BREVET EUROPEEN

(11) **EP 1 151 670 B1**
(45) Date de publication et mention de la délivrance du brevet: **30.10.2002**
(21) Numéro de dépôt: 01400463.4
(22) Date de dépôt: 22.02.2001
(51) Int. Cl.: A22B 5/00

(54) **Procédé pour aspirer la moelle épinière d'un bovin**
Verfahren zum Absaugen des Rückenmarks eines Viehkörpers
Method for sucking the spinal marrow of a bovine

(30) Priorité: 10.11.2000 FR 0014508; 26.12.2000 FR 0017037
(43) Date de publication de la demande: 07.11.2001
(73) Titulaire: Termet Solefi, 72470 Champagne (FR)
(72) Inventeur: Landel, Philippe, 69004 Lyon (FR)
(74) Mandataire: Tanty, François

(56) Documents cités:
- DE-A- 19 824 966
- DE-C- 19 757 745
- FR-A- 1 158 947
- FR-A- 1 160 833
- FR-A- 2 759 866
- US-A- 1 878 671
- US-A- 3 826 242

## Description

La présente invention concerne notamment un procédé destiné à être mils en oeuvre dans un abattoir avant le découpage des carcasses.

La tendance actuelle est de chercher à réduire les risques de contamination de la viande bovine par des tissus susceptibles d'être infectés par le prion de l'ESB (Encéphalite Spongiforme Bovine).

Le brevet DE - C 197 57 745 décrit un dispositif pour l'enlèvement de la moelle du canal rachidien d'une carcasse d'un animal tel qu'un bovin. Ce dispositif comporte un support de fraise fixé à l'extrémité d'un conduit flexible relié à une source de vide. La fraise est entraînée en rotation au moyen d'un arbre s'étendant à l'intérieur du flexible. Un tel dispositif présente une structure relativement complexe et coûteuse. De plus, la fraise, en tournant, broie les tissus contenus à l'intérieur du canal rachidien, ce qui n'est pas souhaitable sur le plan vétérinaire.

La demande de brevet français FR - A - 2 759 866 décrit un procédé d'extraction de la moelle épinière des carcasses d'ovins. Selon ce procédé, on sectionne et on enlève les premières vertèbres sacrées, on introduit par le collier un tube creux rigide, fermé à son extrémité située dans le canal médullaire. Ce tube est associé à un dispositif de projection d'air comprimé visant à pousser la moelle épinière dans le canal médullaire. Un dispositif d'aspiration de la moelle par l'autre extrémité du canal médullaire permet d'évacuer celle-ci. Un tel procédé met en oeuvre une machine relativement complexe et coûteuse. En outre, le canal médullaire doit pouvoir être complètement redressé, ce qui rend le procédé seulement applicable aux jeunes brebis.

La demande de brevet allemand DE 198 24 966 décrit un procédé pour l'enlèvement de la moelle, consistant à injecter dans le canal médullaire un fluide sous pression tandis qu'un dispositif d'aspiration est appliqué de manière étanche contre l'ouverture du canal. Un tel procédé est relativement complexe à mettre en oeuvre et son efficacité dépend notamment de la qualité de l'étanchéité du contact entre le dispositif d'aspiration et l'entrée du canal.

La présente invention a pour objet un nouveau procédé permettant de diminuer les risques de contamination lors de la découpe des carcasses, ce procédé étant caractérisé selon la revendication indépendante 1 par le fait qu'il comporte les étapes consistant à :
a) la carcasse étant dénuquée, introduire du côté du collier dans le canal médullaire une pièce de maintien creuse apte à maintenir la dure-mère en place,
b) insérer dans le canal médullaire, à travers la pièce de maintien, un tuyau relié à une source d'aspiration, de manière à aspirer la moelle épinière.

Des modes particuliers de réalisation de l'invention apparaissent dans les revendications dépendantes 2 à 23.

Grâce à la présence de la pièce de maintien précitée, la dure-mère est maintenue en place même en cas de retrait du tuyau au cours du processus d'aspiration de la moelle épinière.

En l'absence d'une telle pièce de maintien, la dure-mère n'est maintenue en place que par la moelle épinière.

Une fois celle-ci aspirée, la dure-mère est susceptible de se décoller et en cas de retrait puis de réintroduction du tuyau par le collier, elle a tendance à former un bouchon à l'entrée du canal médullaire, gênant l'insertion du tuyau et obligeant l'opérateur à des manipulations difficiles.

L'utilisation d'une pièce de maintien dans l'invention permet donc d'aspirer la moelle épinière d'une manière fiable et suffisamment rapide pour être compatible avec les exigences de production des grands abattoirs.

Grâce à l'aspiration de la moelle, considérée comme une matière à haut risque; on évite les projections de moelle lors du découpage de la carcasse le long du canal médullaire au moyen d'une scie à ruban.

On évite ainsi la dissémination dans l'atmosphère de particules de moelle et l'on diminue le risque de contamination des parties saines.

Dans une mise en oeuvre préférée du procédé selon l'invention, le tuyau utilisé présente une extrémité arrondie, de manière à ne pas endommager la dure-mère lors de son déplacement dans le canal médullaire.

Il est ainsi possible d'effectuer de nombreux mouvements de va-et-vient à l'intérieur du canal médullaire pour exercer une action mécanique facilitant l'aspiration de la moelle épinière, sans endommager la dure-mère.

Le tuyau peut être muni d'un outil apte à séparer des morceaux de moelle lorsqu'il est déplacé dans le canal médullaire.

Un tel outil peut être par exemple constitué par une lame ou un fil fixé dans l'embouchure du tuyau, mais des outils plus complexes peuvent être utilisés, par exemple des outils mûs par une source d'énergie.

Toujours dans une mise en oeuvre préférée du procédé selon l'invention, le canal médullaire est mis à l'air libre du côté opposé au collier, avant l'introduction du tuyau d'aspiration.

Cette mise à l'air est avantageusement effectuée au moyen d'une cisaille comportant une partie fixe apte à être introduite dans l'anus de l'animal et une lame mobile permettant d'enlever, comme un emporte-pièce, la région terminale de la colonne vertébrale, considérée comme une matière à risque.

La pièce de maintien précitée peut être constituée par un insert à usage unique.

La pièce de maintien peut ainsi être laissée en place pour l'opération de découpe de la carcasse.

La pièce de maintien peut également être réutilisable.

La pièce de maintien peut être constituée par un simple tronçon de tube souple, de préférence de diamètre intérieur égal à 13 mm et de diamètre extérieur égal à 16 mm.

La pièce de maintien peut également présenter une forme plus complexe, destinée notamment à faciliter sa mise en place, et notamment présenter une extrémité effilée apte à se dilater radialement pour permettre le passage du tuyau d'aspiration.

La pièce de maintien peut également comporter des ailettes destinées à plaquer la dure-mère contre l'os.

La pièce de maintien peut être solidaire par exemple d'un dispositif de blocage permettant de la maintenir en place, ce dispositif de blocage étant apte à s'accrocher sur le collier par exemple.

La pièce de maintien peut également être solidaire d'un dispositif d'entraînement du tuyau, permettant d'assister l'introduction de celui-ci dans le canal médullaire.

Ainsi, dans une mise en oeuvre préférée du procédé selon l'invention, on assiste le déplacement du tuyau au moyen d'un dispositif d'entraînement, ce qui permet de soulager l'opérateur.

De préférence, le tuyau est engagé par une succession de mouvements ascendants et descendants, le déplacement vers le haut étant supérieur au déplacement vers le bas.

Une telle succession de mouvements permet de générer une action mécanique favorisant l'enlèvement de la moelle épinière.

Toujours dans une mise en oeuvre préférée du procédé selon l'invention, on retire au moins une fois le tuyau du canal médullaire avant d'atteindre l'extrémité supérieure de celui-ci, afin de permettre une mise à l'air libre du tuyau, ce qui facilite l'évacuation des débris de moelle épinière contenus à l'intérieur.

Avantageusement, lors de cette étape intermédiaire, on aspire de l'eau, de préférence chaude, afin de favoriser l'écoulement de la moelle dans le tuyau et lubrifier celui-ci.

Lorsque la pièce de maintien est constituée par un tronçon de tube, on procède avantageusement de la manière suivante :
a) on introduit la pièce de maintien dans le canal médullaire par son extrémité distale,
b) on engage le tuyau d'aspiration vers le haut, dans le canal médullaire, à travers la pièce de maintien,
c) on redescend le tuyau d'aspiration en gardant la pièce de maintien immobile jusqu'à ce que l'ouverture du tuyau d'aspiration ait franchit l'extrémité distale de la pièce de maintien,
d) on redescend simultanément la pièce de maintien et le tuyau d'aspiration.

De préférence, on utilise un tuyau d'aspiration souple dont l'extrémité distale est plus rigide, étant de préférence rigidifiée au moyen d'un embout rapporté ou surmoulé, à extrémité arrondie.

La présente demande décrit un tuyau pour l'aspiration de la moelle contenue dans le canal médullaire d'un bovin, ce tuyau étant caractérisé par le fait qu'il comporte un flexible pourvu à une extrémité d'un embout dont l'extrémité extérieure est arrondie.

L'embout comporte avantageusement une jupe intérieure fixée au flexible, par exemple par collage, soudure ou surmoulage, cette jupe intérieure se raccordant à une couronne annulaire dont la surface extérieure est arrondie, la couronne annulaire et la jupe intérieure formant un décrochement apte à venir en appui sur la tranche d'extrémité du flexible et ayant de préférence sensiblement la même largeur.

La présence de l'embout rigidifie l'extrémité du tuyau d'aspiration et facilite son introduction dans le canal médullaire, le tuyau d'aspiration pouvant être très souple, ayant de préférence une épaisseur de paroi inférieure à 1,5 mm, de préférence voisine de 1 mm, un diamètre extérieur de préférence inférieur à 13 mm, de préférence encore voisin de 12 mm, un diamètre intérieur de préférence supérieur à 9 mm, et de préférence encore voisin de 10 mm.

L'embout peut porter un moyen apte à exercer une action mécanique sur la moelle épinière, par exemple un moyen tranchant.

Ce moyen destiné à exercer une action mécanique sur la moelle comporte par exemple un fil s'étendant selon un diamètre de la jupe intérieure, entre deux régions opposées de celle-ci.

Le présente demande décrit un insert à usage unique qui comporte un corps tubulaire pourvu de moyens aptes à s'appliquer contre la dure-mère au niveau du collier.

Un tel insert est avantageusement réalisé par moulage de matière plastique.

L'insert peut comporter une pluralité de lamelles flexibles, élastiquement déformables dans le sens radial.

Le corps de l'insert tubulaire peut présenter une surface conique à au moins l'une de ses extrémités axiales, destinée à faciliter l'introduction de l'insert dans le canal médullaire ou à faciliter l'engagement du tuyau au travers de l'insert, ou encore le centrage d'un organe d'entraînement du tuyau.

La pièce de maintien peut encore comporter à son extrémité distale, destinée à être introduite dans la moelle, une partie effilée comportant des languettes flexibles aptes à s'écarter pour permettre le passage du tuyau d'aspiration.

La présente demande décrit une pièce de maintien de la dure-mère d'une colonne vertébrale de bovin, cette pièce de maintien étant caractérisée par le fait qu'elle comporte une partie creuse de forme générale tronconique agencée pour venir en appui contre la dure-mère et maintenir celle-ci en place.

La pièce de maintien peut être souple et présenter une longueur supérieure à 10 cm, par exemple.

Une telle pièce de maintien peut être solidaire de moyens de blocage aptes à venir en prise sur le collier.

Ces moyens de blocage sont de préférence actionnés par un mécanisme hydraulique ou pneumatique.

La pièce de maintien peut également être solidaire d'un mécanisme d'entraînement du tuyau.

La pièce de maintien peut encore être solidaire de moyens de préhension permettant à l'opérateur de la maintenir en place pendant l'introduction ou le retrait du tuyau dans le canal médullaire.

La présente demande décrit un dispositif d'entraînement d'un tuyau à l'intérieur du canal médullaire d'un bovin, ce dispositif étant caractérisé par le fait qu'il comporte :
- des moyens de blocage aptes à venir en appui sur le collier pour maintenir le dispositif d'entraînement dans une position sensiblement fixe par rapport au collier,
- des moyens d'entraînement aptes à déplacer le tuyau par rapport au collier, au moins dans le sens de l'introduction dans le canal médullaire, et de préférence également dans le sens opposé.

Ces moyens d'entraînement comportent par exemple des galets d'entraînement aptes à venir au contact du tuyau pour l'entraîner par friction.

Le dispositif d'entraînement comporte avantageusement des moyens de commande permettant d'inverser périodiquement le sens de déplacement du tuyau.

Le tuyau peut être muni d'un conduit permettant d'amener du liquide au niveau de l'extrémité introduite dans le canal médullaire, par exemple de l'eau chaude, afin de faciliter le détachement de la moelle et son aspiration par le tuyau.

Le tuyau peut également comporter des moyens permettant d'amener une énergie motrice au niveau de l'extrémité du tuyau, afin d'actionner par exemple un outil destiné à exercer une action mécanique sur la moelle pour la désagréger et faciliter son enlèvement par aspiration.

Le dispositif d'entraînement du tuyau peut avantageusement comporter une partie en saillie destinée à s'engager dans le canal médullaire afin de faciliter l'insertion du tuyau dans celui-ci.

Cette partie en saillie peut venir en appui sur un insert à usage unique précédemment introduit dans le canal médullaire.

La partie en saillie peut également servir à l'introduction de l'insert dans le canal médullaire.

La présente demande décrit une cisaille destinée à mettre à l'air libre le canal médullaire d'un bovin au niveau de l'extrémité opposée au collier, cette cisaille étant caractérisée par le fait qu'elle comporte :
- une partie fixe à introduire dans l'anus de l'animal,
- une lame mobile par rapport à la partie fixe et permettant d'enlever comme un emporte-pièce une partie du bovin,
- des moyens d'entraînement de la lame mobile.

Cette lame présente avantageusement un profil en U lorsqu'elle est observée dans une direction perpendiculaire à l'axe de pivotement et à la direction longitudinale de la partie fixe, afin de ne pas enlever le rumsteak de l'animal.

La présente demande décrit un stérilisateur, notamment pour la mise en oeuvre du procédé selon l'invention, caractérisé par le fait qu'il comporte
- un corps tubulaire s'élargissant à son ouverture inférieure, ce corps tubulaire étant apte à recevoir le tuyau d'aspiration,
- des buses de pulvérisation d'eau chaude sur le tuyau d'aspiration à l'intérieur du corps tubulaire,
- un support rotatif pour maintenir le corps tubulaire avec une possibilité de rotation autour d'un axe de rotation vertical.

L'invention a encore pour objet une installation telle que définie dans les revendications 24 à 27.

L'invention sera mieux comprise à la lecture de la description détaillée qui va suivre, d'exemples non limitatifs de mise en oeuvre de l'invention, et à l'examen du dessin annexé, sur lequel :
- la figure 1 représente de manière schématique une carcasse suspendue, dénuquée et avec l'extrémité du canal médullaire opposée au collier mise à l'air,
- la figure 2 est une coupe schématique et partielle dans un plan médian de la colonne vertébrale du bovin,
- la figure 3 représente de manière schématique et partielle une cisaille permettant d'effectuer la mise à l'air libre précitée,
- la figure 4 est une vue de face selon la flèche IV de la figure 3,
- la figure 5 représente un dispositif d'entraînement du tuyau, fixé sur le collier,
- la figure 6 représente de manière très schématique le mécanisme d'entraînement du tuyau,
- la figure 7 représente l'extrémité du tuyau,
- la figure 8 représente l'insert à introduire dans l'embouchure du canal médullaire,
- la figure 9 illustre la fixation temporaire de l'insert sur le mécanisme d'entraînement du tuyau,
- la figure 10 représente une variante de réalisation de la pièce de maintien de la dure-mère,
- la figure 11 est une coupe axiale, schématique, de l'extrémité d'un tuyau d'aspiration conforme à une variante de réalisation,
- la figure 12 est une coupe axiale, schématique, d'un tronçon de tube souple utilisable comme pièce de maintien,
- la figure 13 est une coupe axiale, schématique, d'un insert conforme à une variante de réalisation, et
- la figure 14 est une coupe axiale, schématique, d'un stérilisateur conforme à l'invention.

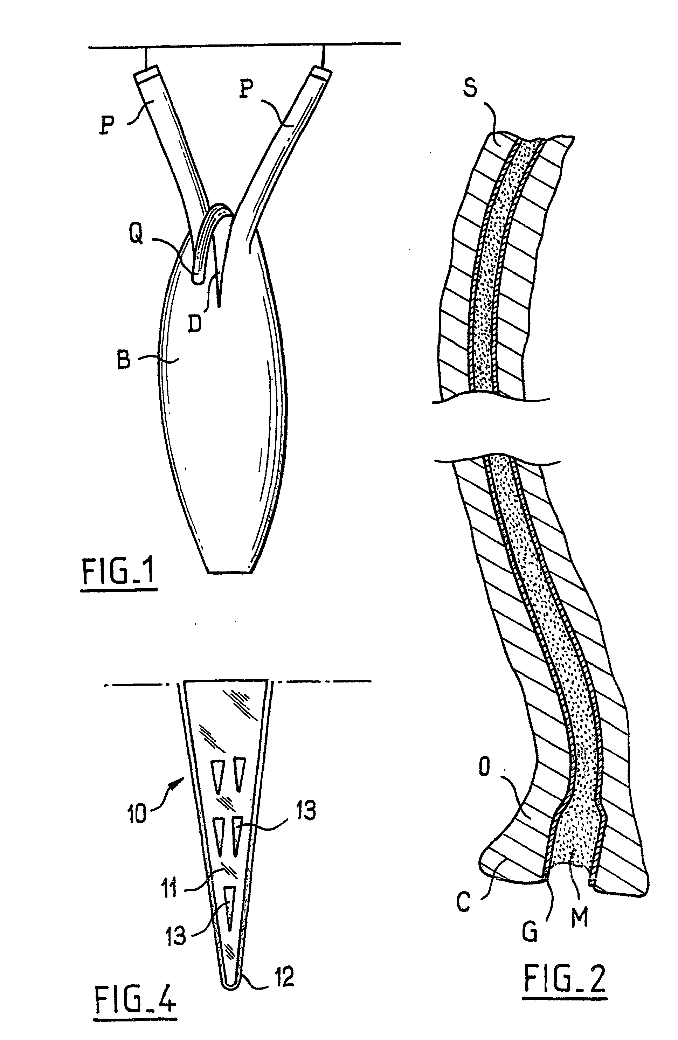

On a représenté sur la figure 1 en vue de dos une carcasse bovine B maintenue suspendue verticalement de manière conventionnelle par les pattes arrière P de l'animal.

La carcasse B a été dénuquée.

Une découpe D à l'emporte-pièce a également été réalisée pour mettre à l'air libre l'extrémité supérieure du canal médullaire.

Dans l'exemple de la figure 1, la queue de l'animal est toujours présente sur la carcasse mais on ne sort pas du cadre de la présente invention lorsque celle-ci a été précédemment enlevée.

On a représenté sur la figure 2 de manière très schématique la colonne vertébrale du bovin.

Cette colonne comporte une structure osseuse O et une gaine G appelée dure-mère, remplie de moelle épinière M.

La partie inférieure de la colonne constitue le collier C, la partie supérieure S est à l'air libre grâce à la découpe D.

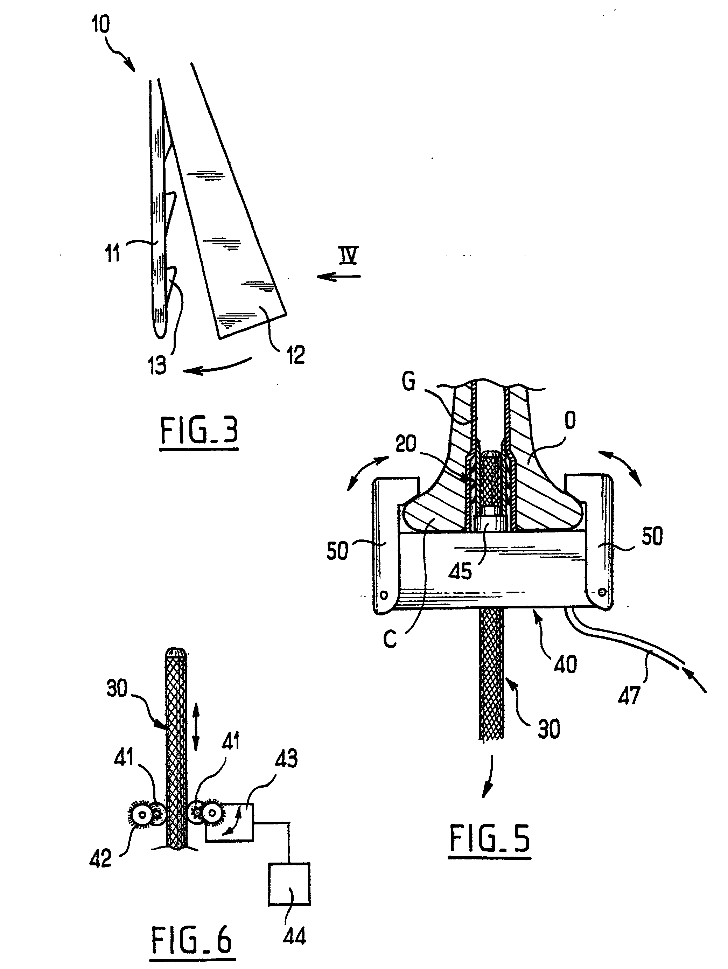

On a représenté sur les figures 3 et 4 la cisaille 10 permettant d'effectuer cette découpe D.

Cette cisaille 10 comporte une partie fixe 11 destinée à être introduite dans l'anus de l'animal et une lame 12 apte à être entraînée en pivotement par rapport à la partie fixe 11 au moyen d'un mécanisme d'entraînement non représenté, par exemple un mécanisme hydraulique ou pneumatique.

La partie fixe 11 comporte des reliefs 13 permettant d'améliorer son maintien en place dans l'animal.

Lorsque la lame 12 est entraînée en pivotement jusqu'à recouvrir avec un faible jeu la partie fixe 11, elle enlève comme un emporte-pièce une partie de l'animal.

Le procédé selon l'invention est mis en oeuvre, dans l'exemple illustré à la figure 5, au moyen d'un insert 20 introduit dans le canal médullaire, d'un tuyau d'aspiration 30 et d'un dispositif d'entraînement 40 permettant d'assister l'opérateur dans le déplacement du tuyau 30.

Le dispositif d'entraînement 40 comporte à l'intérieur d'un carter un mécanisme d'entraînement à galets 41, représenté sur la figure 6, ces galets 41 venant s'appliquer avec friction sur le tuyau 30 et étant actionnés par un mécanisme à engrenages 42, et par un moteur 43, par exemple un moteur pneumatique ou hydraulique, relié à un dispositif de commande 44 et à une source d'énergie (par exemple une source d'air comprimé) par un flexible 47.

Le dispositif de commande 44 permet à l'opérateur de sélectionner le sens de rotation des galets 41 et donc le déplacement vers le haut ou vers le bas du tuyau 30.

Le dispositif d'entraînement 40 comporte des moyens de blocage constitués dans l'exemple illustré par des bras ou mâchoires 50, aptes à venir en appui contre le collier C, comme on peut le voir sur la figure 5.

Ces bras 50 sont actionnés par tout mécanisme approprié, de préférence pneumatique ou hydraulique, non représenté dans un souci de clarté du dessin.

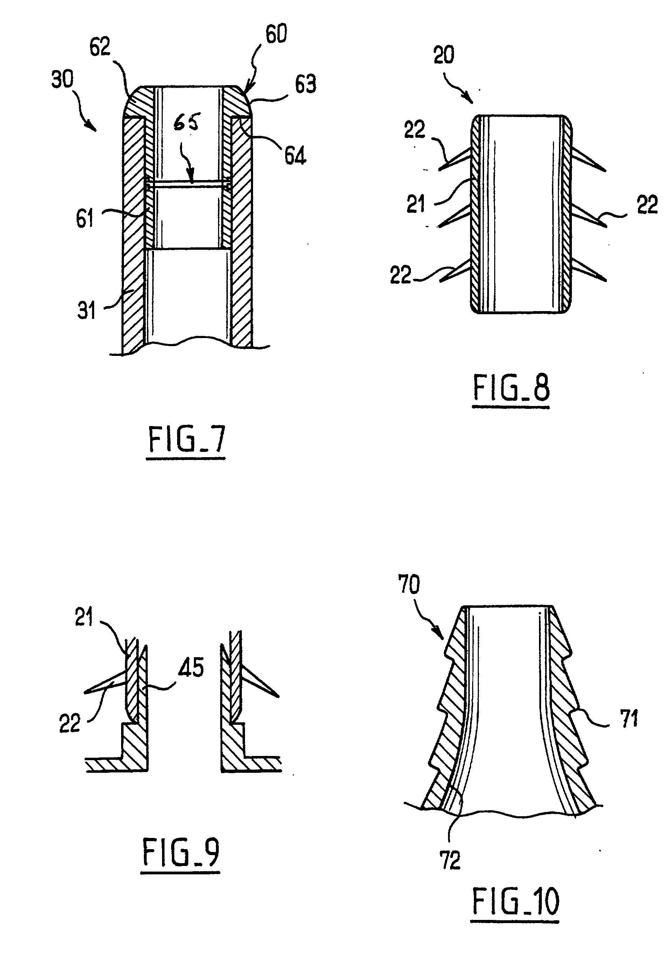

Le tuyau 30 comporte, comme représenté sur la figure 7, un flexible 31 apte à travailler en dépression, pourvu à son extrémité d'un embout 60.

Cet embout 60 comporte une jupe intérieure 61 fixée par soudure ou collage sur la surface intérieure du flexible 31 et une couronne extérieure 62 dont la surface extérieure 63 est arrondie afin de ne pas blesser la dure-mère G lors du déplacement du tuyau 30 dans le canal médullaire.

L'embout 60 peut également être surmoulé sur le flexible 31.

La couronne 62 se raccorde à la jupe intérieure 61 en formant un décrochement 64 venant en appui contre la tranche d'extrémité du flexible 31.

Un outil tranchant tel qu'un fil 65 est fixé à l'intérieur de l'embout 60, par exemple en deux emplacements diamétralement opposés de la jupe intérieure 61.

L'embout 60 peut être réalisé en matière plastique ou en métal.

Si l'embout 60 est réalisé en métal, le fil 65 est de préférence métallique et soudé à la jupe intérieure 61.

Le fil 65 peut être remplacé par tout autre organe apte à exercer une action mécanique sur la moelle lorsque le tuyau 30 est déplacé dans le canal médullaire, par exemple une lame ou autre.

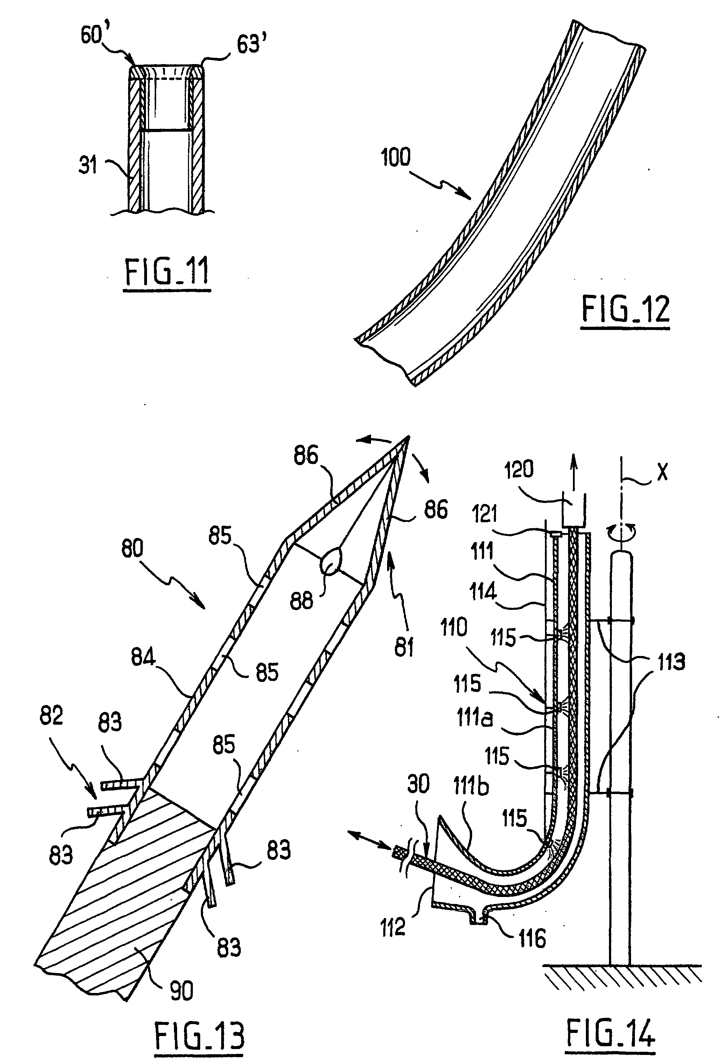

L'embout peut également être dépourvu d'outil tranchant, comme illustré à la figure 11.

Sur cette figure, on a représenté un embout 60' qui diffère de l'embout 60 par l'absence d'outil tranchant 65 et par la forme de sa surface extérieure 63', complètement arrondie et demi-circulaire en section, dans l'exemple illustré.

L'embout 60 ou 60' permet de rigidifier l'extrémité du flexible 31, lequel peut être très souple, étant dans l'exemple décrit de diamètre intérieur égal à 10 mm et de diamètre extérieur égal à 12 mm.

L'insert 20 est représenté isolément sur la figure 8 et comporte un corps tubulaire 21 dont le diamètre intérieur est suffisamment important pour permettre le passage du tuyau 30, ce corps 21 étant muni extérieurement d'une pluralité d'organes élastiquement déformables dans le sens radial, constitués ici par des lamelles 22 aptes à fléchir en se rapprochant du corps tubulaire 21 lors de la mise en place de l'insert 20 dans le canal médullaire.

L'insert 20 est avantageusement réalisé d'un seul tenant par moulage en matière plastique.

Les lamelles 22 sont agencées de manière à plaquer la dure-mère G contre la structure osseuse O lorsque l'insert 20-est mis en place, afin de maintenir la dure-mère G en position même en l'absence de moelle M et du tuyau 30.

L'introduction de l'insert 20 dans le canal médullaire peut se faire au moyen de tout outil d'insertion adapté, le cas échéant.

On remarquera que dans l'exemple de réalisation décrit, le dispositif d'entraînement 40 comporte une partie 45 formant saillie, apte à s'engager dans l'ouverture du canal médullaire et dans l'insert 20, comme illustré sur la figure 9, de façon à guider le tuyau 30 à l'intérieur de l'insert 20.

Le dispositif d'entraînement 40 sert ici en outre à mettre en place l'insert 20 dans le canal médullaire.

Le procédé selon l'invention peut être mis en oeuvre de la manière suivante.

On suppose que la carcasse B se trouve dans l'état représenté sur la figure 1, c'est-à-dire qu'elle a été dénuquée et que la découpe D a été réalisée par exemple au moyen de la cisaille 10 décrite précédemment.

On commence par mettre en place l'insert 20 dans l'extrémité du canal médullaire débouchant au niveau du collier C, après avoir monté l'insert 20 sur la partie 45 du dispositif d'entraînement 40, de manière à se servir de ce dernier comme d'un outil d'insertion.

Le mécanisme d'entraînement 40 est mis en place alors que les bras 50 sont écartés puis ces derniers sont déplacés en rapprochement l'un vers l'autre de manière à prendre appui supérieurement sur le rebord du collier, comme représenté sur la figure 5.

Le tuyau 30 est relié à un ensemble d'aspiration non représenté, comportant des moyens permettant de séparer l'air et de récupérer les matières solides, de manière conventionnelle.

L'avancement du tuyau 30 dans le canal médullaire s'effectue de préférence par une succession de déplacements vers le haut, par exemple d'une vingtaine de centimètres, suivis de déplacements vers le bas d'une distance inférieure, par exemple une dizaine de centimètres, afin d'exercer sur la moelle une action mécanique facilitant son détachement de la dure-mère G et la formation de copeaux faciles à aspirer.

La souplesse du flexible 31, combinée à la présence de l'embout 60 ou 60', permet au tuyau 30 de franchir aisément le coude formé par le canal médullaire, du côté du collier.

L'opérateur actionne le dispositif de commande 44 de manière à provoquer cette succession de mouvements ascendants et descendants.

L'opérateur procède de cette manière jusqu'à atteindre la moitié environ de la longueur de la colonne vertébrale, puis sort le tuyau 30 pour permettre une remise à l'air libre du canal médullaire au niveau du collier et une mise à l'air également du tuyau 30.

De préférence, une certaine quantité d'eau chaude est alors aspirée afin de nettoyer le tuyau 30 et lubrifier ce dernier, puis le tuyau 30 est réintroduit dans le canal médullaire pour aspirer la seconde moitié de moelle épinière, en procédant par une succession de déplacements vers le haut et vers le bas comme précédemment.

Grâce à la présence de la pièce de maintien 20, la réinsertion du tuyau 30 dans la partie inférieure du canal médullaire, dépourvue de moelle M, se fait sans endommager et sans déplacer la dure-mère G, laquelle ne gêne ainsi pas la réinsertion du tuyau 30 et conserve sa fonction de gaine d'étanchéité.

Grâce à la présence de l'extrémité arrondie du tuyau 30, la dure-mère G n'est pratiquement jamais endommagée.

Si cela était le cas, du sang et de l'air seraient aspirés à la place de la moelle M et le traitement ne pourrait plus s'effectuer correctement.

Après l'aspiration complète de la moelle M, le dispositif d'entraînement 40 est retiré, l'insert 20 restant en place et la carcasse peut être découpée de manière conventionnelle au moyen d'une scie à ruban, en suivant le canal médullaire.

Du fait de l'absence de moelle M dans celui-ci, on évite les projections de moelle et la dissémination de particules potentiellement contaminées dans l'environnement de la carcasse B.

Bien entendu, l'invention n'est pas limitée aux exemples qui viennent d'être décrits.

On peut notamment utiliser comme pièce de maintien une pièce de forme générale tronconique 70 telle que celle représentée sur la figure 10, comportant sur sa surface extérieure une pluralité de reliefs 71 destinés à permettre un coincement de cette pièce dans le canal médullaire, contre la dure-mère G.

Une telle pièce de maintien comporte également une embouchure inférieure conique 72 destinée à faciliter l'insertion du tuyau 30.

La pièce 70 peut être solidaire d'un dispositif de blocage similaire à celui représenté sur la figure 5.

La pièce de maintien 70 peut encore être solidaire d'un organe de préhension qui permet à l'opérateur de participer à son maintien sur le collier pendant la manoeuvre du tuyau, si nécessaire.

On peut encore utiliser comme pièce de maintien un insert 80 tel que celui représenté à la figure 13, comportant une extrémité distale 81 effilée, destinée à faciliter sa mise en place.

L'extrémité proximale 82 de l'insert 80 peut être munie ou non de moyens destinées à plaquer la dure-mère G contre la structure osseuse O.

Dans l'exemple illustré, l'insert 80 comporte des ailettes flexibles 83 destinées à appliquer la dure-mère G contre la structure osseuse O.

Le corps tubulaire 84 de l'insert peut être pourvu d'ouvertures 85 destinées à permettre l'aspiration de la moelle emprisonnée entre l'insert 80 et la dure-mère G, lorsque l'insert 80 est en place.

L'extrémité effilée 81 comporte des languettes flexibles 86 aptes à s'écarter sous la poussée du tuyau d'aspiration 30 lorsque ce dernier est introduit dans l'insert 80.

Le nombre de languettes flexibles 86 peut être compris entre deux et une dizaine, par exemple.

De préférence, des ouvertures 88 sont réalisées à la base des languettes flexibles 86, au niveau de leur jonction, pour faciliter leur déformation radiale et éviter la formation de fissures dans le corps 84 de l'insert.

L'insert 80 est réalisé par moulage de matière plastique souple.

L'insert 80 peut coopérer avec un outil 90 utilisé pour le pousser dans le canal médullaire.

Le corps 84 est légèrement conique, de manière à permettre le gerbage des inserts 80 et facilite leur empilage.

La longueur du corps 84 est supérieure à 10 cm dans l'exemple illustré.

La pièce de maintien peut également être constituée par un simple tronçon de tube souple 100, comme illustré à la figure 12.

Ce tube 100 a de préférence un diamètre extérieur égal à 16 mm et un diamètre intérieur égal à 13 mm.

La mise en place du tube 100 est assez délicate, mais possible dans la plupart des cas.

Une fois le tube 100 partiellement engagé dans le canal médullaire à l'intérieur de la dure-mère G, le tuyau d'aspiration 30 est introduit dans le tube 100 et l'on aspire la moelle M jusqu'en haut.

Le tuyau d'aspiration 30 est ensuite descendu lentement et lorsque son extrémité distale arrive sous le niveau du tube 100, le tuyau 30 et le tube 100 sont extraits simultanément.

On notera que le tube 100 ne plaque pas la dure-mère G contre la structure osseuse mais maintient suffisamment celle-ci pour l'empêcher d'être aspirée ou de se déchirer lors de l'introduction du tuyau d'aspiration.

On peut, sans sortir du cadre de l'invention, munir le tuyau d'un moyen permettant d'amener de l'énergie mécanique au niveau de l'extrémité introduite dans le canal médullaire, afin d'entraîner en déplacement un mécanisme destiné à exercer une action mécanique sur la moelle épinière, par exemple une vrille apte à fragmenter la moelle épinière.

On peut encore munir le tuyau d'un conduit permettant d'injecter dans le canal médullaire un fluide simultanément à l'aspiration, par exemple de l'eau chaude, afin de faciliter l'enlèvement de la moelle M.

On ne sort pas du cadre de la présente invention lorsque le déplacement du tuyau est effectué manuellement uniquement, sans assistance mécanique.

On a représenté à la figure 14 un stérilisateur 110 qui permet de chauffer le tuyau d'aspiration 30 à une température de 82 °C, afin d'éliminer la plupart des germes et faciliter le détachement de résidus de moelle éventuellement collés sur sa surface intérieure.

Ce stérilisateur comporte un corps 111 présentant une partie verticale 11 la et une partie incurvée 111b, cette dernière définissant une ouverture élargie 112 pour la sortie du tuyau 30.

La partie verticale 111a est supportée par une structure rotative 113 pouvant tourner autour d'un axe vertical X.

Le corps 111 porte une rampe 114 d'alimentation de buses 115, agencées pour pulvériser sur le tuyau d'aspiration 30 de l'eau à 82 °C.

La partie incurvée 111b comporte un orifice de drainage 116.

Le tuyau 30 se raccorde au-dessus du stérilisateur à un conduit d'aspiration 120 de plus grand diamètre, étant fixé de manière amovible sur ce dernier.

Le tuyau 30 peut ainsi être remplacé à chaque utilisation, par exemple.

Le stérilisateur 110 peut être équipé d'un capteur 121 permettant de déclencher le fonctionnement des buses 115 de manière automatique, lorsque le tuyau 30 est dans une position prédéterminée, ce capteur 121 étant par exemple sensible à la présence du conduit 120 à son niveau.

Le conduit 120 est suspendu à un dispositif de suspension connu en soi et non représenté dans un souci de clarté du dessin.

## Revendications

1. Procédé permettant de diminuer les risques de contamination, notamment par le prion de l'ESB, lors de la découpe des carcasses bovines, ce procédé étant **caractérisé par le fait qu'**il comporte les étapes consistant à :
a) la carcasse (B) étant dénuquée, introduire du côté du collier (C) dans le canal médullaire une pièce de maintien (20 ; 70 ; 80 ; 100) creuse apte à maintenir la dure-mère (G) en place,
b) insérer dans le canal médullaire, à travers la pièce de maintien (20 ; 70 ; 80 ; 100), un tuyau (30) relié à une source d'aspiration, de manière à aspirer la moelle épinière (M).

2. Procédé selon la revendication 1, **caractérisé par le fait que** le tuyau (30) présente une extrémité arrondie, de manière à ne pas endommager la dure-mère (G) lors de son déplacement dans le canal médullaire.

3. Procédé selon l'une quelconque des revendications précédentes, **caractérisé par le fait que** le canal médullaire est mis à l'air libre du côté opposé au collier avant l'introduction du tuyau d'aspiration.

4. Procédé selon la revendication précédente, **caractérisé par le fait que** la mise à l'air est effectuée au moyen d'une cisaille (10) comportant une partie fixe (11) apte à être introduite dans l'anus de l'animal et une lame mobile (12) permettant d'enlever comme un emporte-pièce la région terminale de la colonne vertébrale.

5. Procédé selon l'une quelconque des revendications précédentes, **caractérisé par le fait que** la pièce de maintien est constituée par un insert (20 ; 80 ; 100) à usage unique.

6. Procédé selon l'une quelconque des revendications précédentes, **caractérisé par le fait qu'**on assiste le déplacement du tuyau (30) au moyen d'un dispositif d'entraînement (40).

7. Procédé selon l'une quelconque des revendications précédentes, **caractérisé par le fait que** le tuyau (30) est engagé par une succession de mouvements ascendants et descendants, le déplacement vers le haut étant supérieur au déplacement vers le bas.

8. Procédé selon l'une quelconque des revendications précédentes, **caractérisé par le fait que** l'on retire au moins une fois le tuyau (30) du canal médullaire avant d'atteindre l'extrémité supérieure de celui-ci, afin de permettre une mise à l'air libre du tuyau.

9. Procédé selon la revendication précédente, **caractérisé par le fait qu'**on aspire de l'eau, de préférence chaude, après le retrait du tuyau (30) lors de cette étape intermédiaire, afin de favoriser l'écoulement de la moelle dans le tuyau et lubrifier celui-ci.

10. Procédé selon l'une quelconque des revendications précédentes, **caractérisé par le fait que** la pièce de maintien est laissée en place pour l'opération de découpe de la carcasse.

11. Procédé selon l'une quelconque des revendications précédentes, **caractérisé par le fait que** l'on utilise comme pièce de maintien un simple tronçon de tube souple (100), de préférence de diamètre intérieur égal à 13 mm et de diamètre extérieur égal à 16 mm.

12. Procédé selon l'une quelconque des revendications précédentes, **caractérisé par le fait que** le tuyau comporte un flexible (31) apte à travailler en dépression et pourvu à son extrémité d'un embout (60) et **par le fait qu'**un outil tranchant (65) est fixé à l'intérieur de l'embout.

13. Procédé selon l'une quelconque des revendications 1 à 11, **caractérisé par le fait que** le tuyau comporte un flexible (31) apte à travailler en dépression et pourvu à son extrémité d'un embout (60') dépourvu d'outil tranchant.

14. Procédé selon l'une quelconque des revendications précédentes, **caractérisé par le fait que** le tuyau comporte un flexible apte à travailler en dépression et pourvu à son extrémité d'un embout (60') permettant de rigidifier l'extrémité du flexible.

15. Procédé selon la revendication 14, **caractérisé par le fait que** la forme de la surface extérieure de l'embout est complètement arrondie et demi-circulaire en section.

16. Procédé selon l'une quelconque des revendications précédentes, **caractérisé par le fait que** l'on utilise un stérilisateur comportant des buses de pulvérisation d'eau chaude à l'intérieur d'un corps tubulaire (111).

17. Procédé selon l'une quelconque des revendications précédentes, **caractérisé par le fait que** l'on utilise un stérilisateur comportant un corps (111) présentant une partie verticale (111a) et une partie incurvée (111b), cette dernière définissant une ouverture élargie (112) pour la sortie du tuyau (30), la partie verticale (111a) étant supportée par une structure rotative (113) pouvant tourner autour d'un axe vertical (X).

18. Procédé selon la revendication 16 ou 17, **caractérisé par le fait que** le tuyau se raccorde au-dessus du stérilisateur à un conduit d'aspiration (120) de plus grand diamètre, étant fixé de manière amovible sur ce dernier.

19. Procédé selon l'une des trois revendications immédiatement précédentes, **caractérisé par le fait que** l'on déclenche le fonctionnement des buses (115) de manière automatique, lorsque le tuyau (30) est dans une position prédéterminée.

20. Procédé selon la revendication précédente, **caractérisé par le fait que** le stérilisateur est équipé d'un capteur (121) permettant de déclencher le fonctionnement des buses de manière automatique.

21. Procédé selon la revendication 13, **caractérisé par le fait que** le flexible (31) utilisé est pourvu à une extrémité d'un embout (60 ; 60') dont l'extrémité extérieure est arrondie, le diamètre extérieur du flexible étant de préférence inférieur à 13 mm, de préférence encore voisin de 12 mm, le diamètre intérieur du flexible (31) étant de préférence supérieur à 9 mm, de préférence encore voisin de 10 mm, l'épaisseur du flexible (31) étant de préférence comprise entre 0,5 et 1,5 mm et de préférence voisine de 1 mm.

22. Procédé selon la revendication précédente, **caractérisé par le fait que** l'embout du flexible utilisé comporte une jupe intérieure fixée au flexible (31), de préférence par soudure, cette jupe intérieure se raccordant à une couronne annulaire dont la surface extérieure (63; 63') est arrondie, la couronne annulaire et la jupe intérieure formant un décrochement apte à venir en appui sur la tranche du flexible et ayant de préférence sensiblement la même largeur.

23. Procédé selon la revendication 13, **caractérisé par le fait que** l'embout (60; 60') du flexible utilisé est surmoulé sur le flexible (31).

24. Installation pour la mise en oeuvre du procédé tel que défini dans l'une quelconque des revendications précédentes, comportant une pompe à vide et un tuyau d'aspiration, **caractérisée par le fait que**:
- le tuyau d'aspiration (30) comporte un flexible (31) pourvu à une extrémité d'un embout (60, 60') dont l'extrémité extérieure est arrondie,
et **par le fait qu'**elle comporte en outre :
- une pièce de maintien (20, 70, 80, 100) de la dure-mère, à travers laquelle le tuyau d'aspiration (30) peut être introduit.

25. Installation selon la revendication 24, **caractérisée par le fait que** le tuyau d'aspiration (30) se raccorde à un conduit d'aspiration (120) de plus grand diamètre, étant fixé de manière amovible sur ce dernier.

26. Installation selon l'une des revendications 24 et 25, **caractérisée par le fait qu'**elle comporte en outre un stérilisateur permettant de chauffer le tuyau d'aspiration (30).

27. Installation selon la revendication 26, **caractérisée par le fait que** le stérilisateur comporte un corps tubulaire (111) et des buses de pulvérisation d'eau chaude à l'intérieur du corps tubulaire.

## Claims

1. A method of reducing the risks of contamination, in particular by the BSE prion, while cutting up bovine carcasses, the method being **characterized by** the fact that it comprises the steps consisting in:
a) once the head has been removed from the carcass (B), introducing a hollow holding piece (20; 70; 80; 100) into the neck end (C) of the spinal channel, said holding piece being suitable for holding the dura mater (G) in place; and
b) inserting a pipe (30) into the spinal channel through the holding piece (20; 70; 80; 100), the pipe being connected to a suction source for the purpose of sucking out the spinal cord (M).

2. A method according to claim 1, **characterized by** the fact that the pipe (30) has a rounded end so as to avoid damaging the dura mater (G) while it is moving in the spinal channel.

3. A method according to claim 1 or claim 2, **characterized by** the fact that the spinal channel is opened to the atmosphere at its end remote from the neck prior to introducing the suction pipe.

4. A method according to the preceding claim, **characterized by** the fact that the channel is opened to the atmosphere by means of shears (10) comprising a fixed portion (11) suitable for being inserted into the anus of the animal and a moving blade (12) acting in the manner of a hollow punch to remove the end region of the spinal column.

5. A method according to any preceding claim, **characterized by** the fact that the holding piece is constituted by a disposable insert (20; 80; 100).

6. A method according to any preceding claim, **characterized by** the fact that movement of the pipe (30) is assisted by means of a drive device (40).

7. A method according to any preceding claim, **characterized by** the fact that the pipe (30) is engaged by a succession of upward and downward movements, the upward movements being longer than the downward movements.

8. A method according to any preceding claim, **characterized by** the fact that the pipe (30) is withdrawn at least once from the spinal channel prior to reaching the top end thereof, in order to open the pipe to the atmosphere.

9. A method according to the preceding claim, **characterized by** the fact that water, preferably hot water, is sucked into the pipe (30) after it has been withdrawn during said intermediate step in order to encourage the spinal cord to flow inside the pipe and in order to lubricate it.

10. A method according to any preceding claim, **characterized by** the fact that the holding piece is left in place during the operation of cutting up the carcass.

11. A method according to any preceding claim, **characterized by** the fact that the holding piece is constituted merely by a segment of flexible tube (100), preferably having an inside diameter equal to 13 mm and an outside diameter equal to 16 mm.

12. A method according to any preceding claim, **characterized by** the fact that the pipe comprises a hose (31) suitable for operating in suction and provided at its end with an endpiece (60), and by the fact that a cutting tool (65) is fixed inside the endpiece.

13. A method according to any one of claims 1 to 11, **characterized by** the fact that the pipe comprises a hose (31) suitable for working in suction and provided at its end with an endpiece (60') that does not include a cutting tool.

14. A method according to any preceding claim, **characterized by** the fact that the pipe comprises a hose suitable for working in suction and provided at its end with an endpiece (60') enabling the end of the hose to be stiffened.

15. A method according to claim 14, **characterized by** the fact that the shape of the outside surface of the endpiece is completely rounded and is semicircular in section.

16. A method according to any preceding claim, **characterized by** the fact that a sterilizer is used that includes nozzles for spraying hot water inside a tubular body (111).

17. A method according to any preceding claim, **characterized by** the fact that a sterilizer is used comprising a body (111) having a vertical portion (111a) and a curved portion (111b), the curved portion defining an enlarged opening (112) through which the pipe (30) is extracted, the vertical portion (111a) being supported by a rotary structure (113) capable of turning about a vertical axis (X).

18. A method according to claim 16 or claim 17, **characterized by** the fact that the pipe is connected above the sterilizer to a suction duct (120) of larger diameter, and is releasably fastened thereto.

19. A method according to any one of the three immediately preceding claims, **characterized by** the fact that the operation of the nozzles (115) is triggered automatically when the pipe (30) is in a predetermined position.

20. A method according to the preceding claim, **characterized by** the fact that the sterilizer is fitted with a sensor (121) enabling the operation of the nozzles to be triggered automatically.

21. A method according to claim 13, **characterized by** the fact that the hose (31) is provided at one end with an endpiece (60; 60') whose outside end is rounded, the outside diameter of the hose preferably being less than 13 mm, and more preferably being close to 12 mm, the inside diameter of the hose (31) preferably being greater than 9 mm, and more preferably being close to 10 mm, and the thickness of the hose (31) preferably lying in the range 0.5 mm to 1.5 mm, and preferably being close to 1 mm.

22. A method according to the preceding claim, **characterized by** the fact that the endpiece of the hose comprises an inner skirt fixed to the hose (31), preferably by heat-sealing, said inner skirt being connected to an annular ring whose outside surface (63; 63') is rounded, the annular ring and the inner skirt forming a setback suitable for bearing against the end face of the hose and preferably having substantially the same width.

23. A method according to claim 13, **characterized by** the fact that the endpiece (60; 60') of the hose is overmolded on the hose (31).

24. An installation for implementing the device according to anyone of the preceding claims, said installation comprising a vacuum pump and a suction pipe, and
**characterized by** the fact that:
- the section pipe (30) comprises a hose (31) provided at one end with an endpiece (60, 60') whose outside end is rounded,
and by the fact that it further comprises:
- a holding piece (20, 70, 80, 100) of the dura mater, through which the suction pipe (30) may be introduct.

25. An installation according to claim 24, **characterized by** the fact that the suction pipe (30) is connected to a suction duct (120) of greater diameter, and is removably fixed thereto.

26. An installation according to claims 24 or 25, **characterized by** the fact that it further comprises a sterilizer enabling to heat the suction pipe (30).

27. An installation according to claim 26, **characterized by** the fact that the sterilizer comprises a tubular body (111) and nozzles for spraying hot water inside the tubular body.

## Patentansprüche

1. Verfahren, mit dem es möglich ist, Kontaminationsgefahren, insbesondere durch BSE-Prionen, beim Zerlegen von Rinderkadavern zu verringern, **dadurch gekennzeichnet, dass** es die folgenden Schritte umfasst:
a) Einführen, nachdem der Kadaver (B) am Genick geöffnet wurde, eines hohlen Halteteils (20; 70; 80; 100) zum Halten der Dura mater (G) an ihrem Ort von der Seite des Halses (C) her in den Wirbelkanal;
b) Einführen, durch das Halteteil (20; 70; 80; 100) hindurch, eines mit einer Absaugquelle verbundenen Schlauchs (30) in den Wirbelkanal, um das Rückenmark (M) abzusaugen.

2. Verfahren nach Anspruch 1, **dadurch gekennzeichnet, dass** der Schlauch (30) ein abgerundetes Ende aufweist, um bei seinem Verschieben im Wirbelkanal die Dura mater (G) nicht zu beschädigen.

3. Verfahren nach einem der vorstehenden Ansprüche, **dadurch gekennzeichnet, dass** der Wirbelkanal von der dem Hals abgewandten Seite her mit der freien Luft verbunden wird, bevor der Absaugschlauch eingeführt wird.

4. Verfahren nach dem vorstehenden Anspruch, **dadurch gekennzeichnet, dass** das Verbinden mit der Luft mittels einer Abbrenneinrichtung (10) erfolgt, die ein festes Teil (11), das in den Anus des Tiers eingeführt werden kann, und eine bewegliche Schneide (12) aufweist, die, wie ein Stanzwerkzeug, den Abschlussbereich der Wirbelsäule entfernen kann.

5. Verfahren nach einem der vorstehenden Ansprüche, **dadurch gekennzeichnet, dass** das Halteteil aus einem Einmaleinsatz (20; 80; 100) besteht.

6. Verfahren nach einem der vorstehenden Ansprüche, **dadurch gekennzeichnet, dass** das Verschieben des Schlauchs (30) durch eine Antriebseinrichtung (40) unterstützt wird.

7. Verfahren nach einem der vorstehenden Ansprüche, **dadurch gekennzeichnet, dass** der Schlauch (30) durch eine Abfolge aufsteigender und absinkender Bewegungen eingeführt wird, wobei das Verschieben nach oben stärker als das nach unten ist.

8. Verfahren nach einem der vorstehenden Ansprüche, **dadurch gekennzeichnet, dass** der Schlauch (30) mindestens einmal aus dem Wirbelkanal herausgezogen wird, bevor das obere Ende desselben erreicht wird, um es zu ermöglichen, den Schlauch mit der freien Luft zu verbinden.

9. Verfahren nach dem vorstehenden Anspruch, **dadurch gekennzeichnet, dass** nach dem Zurückziehen des Schlauchs (30) bei diesem Zwischenschritt Wasser, das vorzugsweise heiß ist, angesaugt wird, um das Abfließen des Marks im Schlauch zu begünstigen und diesen zu schmieren.

10. Verfahren nach einem der vorstehenden Ansprüche, **dadurch gekennzeichnet, dass** das Halteteil für den Vorgang des Zerlegens des Kadavers am Ort belassen wird.

11. Verfahren nach einem der vorstehenden Ansprüche, **dadurch gekennzeichnet, dass** als Halteteil ein einfaches Stück nachgiebiges Rohr (100), vorzugsweise mit einem Innendurchmesser von 13 mm und einem Außendurchmesser von 16 mm, verwendet wird.

12. Verfahren nach einem der vorstehenden Ansprüche, **dadurch gekennzeichnet, dass** der Schlauch ein biegsames Teil (31) aufweist, das bei Unterdruck arbeiten kann und an seinem Ende mit einem Ansatzstück (60) versehen ist, in dessen Innerem ein Schneidwerkzeug (65) befestigt ist.

13. Verfahren nach einem der Ansprüche 1 bis 11, **dadurch gekennzeichnet, dass** der Schlauch ein biegsames Teil (31) aufweist, das bei Unterdruck arbeiten kann und an seinem Ende mit einem Ansatzstück (60') ohne Schneidwerkzeug versehen ist.

14. Verfahren nach einem der vorstehenden Ansprüche, **dadurch gekennzeichnet, dass** der Schlauch ein biegsames Teil aufweist, das bei Unterdruck arbeiten kann und an seinem Ende mit einem Ansatzstück (60') versehen ist, das das Ende des biegsamen Teils verstärken kann.

15. Verfahren nach Anspruch 14, **dadurch gekennzeichnet, dass** die Form des Außenstücks vollständig abgerundet und im Querschnitt halbkreisförmig ist.

16. Verfahren nach einem der vorstehenden Ansprüche, **dadurch gekennzeichnet, dass** eine Sterilisiervorrichtung verwendet wird, die im Inneren eines Schlauchkörpers (111) Spritzdüsen zum Zerstäuben von Wasser aufweist.

17. Verfahren nach einem der vorstehenden Ansprüche, **dadurch gekennzeichnet, dass** eine Sterilisiervorrichtung verwendet wird, die einen Körper (111) mit einem vertikalen Teil (111a) und einem gekrümmten Teil (111b) aufweist, wobei der letztere eine vergrößerte Öffnung (112) für den Austritt des Schlauchs (30) bildet und wobei der vertikale Teil (111a) von einer drehbaren Konstruktion (113) gehalten wird, die sich um eine vertikale Achse (X) drehen kann.

18. Verfahren nach einem der Ansprüche 16 oder 17, **dadurch gekennzeichnet, dass** der Schlauch über der Sterilisiervorrichtung mit einer Ansaugleitung (120) größeren Durchmessers verbunden ist, wobei er unbeweglich an dieser befestigt ist.

19. Verfahren nach einem der drei unmittelbar vorangehenden Ansprüche, **dadurch gekennzeichnet, dass** die Funktion der Spritzdüsen (115) automatisch ausgelöst wird, wenn sich der Schlauch (30) an einer vorbestimmten Position befindet.

20. Verfahren nach dem vorstehenden Anspruch, **dadurch gekennzeichnet, dass** die Sterilisiervorrichtung mit einem Detektor (121) versehen ist, der die Funktion der Spritzdüsen automatisch auslösen kann.

21. Verfahren nach Anspruch 13, **dadurch gekennzeichnet, dass** das verwendete biegsame Teil (31) an einem Ende mit einem Ansatzstück (60; 60') versehen ist, dessen äußeres Ende abgerundet ist, wobei der Außendurchmesser des biegsamen Teils vorzugsweise unter 13 mm beträgt, vorzugsweise ungefähr 12 mm, der Innendurchmesser des biegsamen Teils (31) vorzugsweise über 9 mm, noch bevorzugter ungefähr 10 mm beträgt und die Dicke des biegsamen Teils (31) vorzugsweise zwischen 0,5 und 1,5 mm und vorzugsweise ungefähr 1 mm beträgt.

22. Verfahren nach dem vorstehenden Anspruch, **dadurch gekennzeichnet, dass** der Ansatz des biegsamen Teils (31) ein am biegsamen Teil befestigtes, vorzugsweise durch Löten befestigtes, inneres Hemd aufweist, das mit einer ringförmigen Einfassung verbunden ist, deren Außenfläche (63; 63') abgerundet ist, wobei die ringförmige Einfassung und das innere Hemd einen Absatz bilden, der am Stück des biegsamen Teils zur Anlage kommen kann und vorzugsweise im Wesentlichen dieselbe Größe aufweist.

23. Verfahren nach Anspruch 13, **dadurch gekennzeichnet, dass** das Ansatzstück (60; 60') an das biegsame Teil (31) angespritzt ist.

24. Vorrichtung zum Ausführen des Verfahrens nach einem der vorstehenden Ansprüche, mit einer Vakuumpumpe und einem Absaugschlauch, **dadurch gekennzeichnet, dass**:
- der Absaugschlauch (30) ein biegsames Teil (31) aufweist, das an einem Ende mit einem Ansatzstück (60, 60') versehen ist, dessen äußeres Ende abgerundet ist;
und dass sie weiter Folgendes aufweist:
- ein Halteteil (20, 70, 80, 100) für die Duramater, durch das hindurch der Absaugschlauch (30) eingeführt werden kann.

25. Vorrichtung nach Anspruch 24, **dadurch gekennzeichnet, dass** der Absaugschlauch (30) mit einer Absaugleitung (120) größeren Durchmessers versehen ist, wobei er unbeweglich an dieser befestigt ist.

26. Vorrichtung nach einem der Ansprüche 24 oder 25,
**dadurch gekennzeichnet, dass** sie weiterhin eine Sterilisiervorrichtung aufweist, die den Absaugschlauch (30) erhitzen kann.

27. Vorrichtung nach Anspruch 26, **dadurch gekennzeichnet, dass** die Sterilisiervorrichtung einen rohrförmigen Körper (111) und Zerstäubungsdüsen für heißes Wasser im Inneren desselben aufweist.
